# EUROPÄISCHE PATENTSCHRIFT

(11) **EP 0 688 345 B1**
(45) Veröffentlichungstag und Bekanntmachung des Hinweises auf die Patenterteilung: **24.09.2008**
(21) Anmeldenummer: 94909896.6
(22) Anmeldetag: 28.02.1994
(51) Int. Cl.: C08K 9/12

(54) **p-DINITROSO-BENZOL**
p-DINITROSO BENZOLE
p-DINITROSO-BENZENE

(30) Priorität: 09.03.1993 DE 4307221
(43) Veröffentlichungstag der Anmeldung: 27.12.1995
(73) Patentinhaber: Lord Germany GmbH, 41836 Hückelhoven (DE)
(72) Erfinder: MÜLLER, Burkhard, D-40477 Düsseldorf (DE); CALAMINUS, Brigitte, D-40724 Hilden (DE); BEIERSDORF, Wolf-Dieter, D-40591 Düsseldorf (DE); GRUBER, Werner, D-41352 Korschenbroich (DE); HOFFMANN, Hans-Josef, D-40223 Düsseldorf (DE); WEFRINGHAUS, Rainer, D-40699 Erkrath (DE); KUHM, Peter, D-40724 Hilden (DE); HÜBNER, Norbert, D-40597 Düsseldorf (DE); BLOCK, Christian, D-50688 Köln (DE)
(74) Vertreter: Weber, Thomas
(86) Internationale Anmeldenummer: PCT/EP1994/000579
(87) Internationale Veröffentlichungsnummer: WO 1994/020570

(56) Entgegenhaltungen:
- DD-A- 114 419
- DE-A- 1 494 369
- DE-A- 3 035 181

## Beschreibung

Die Erfindung betrifft p-Dinitroso-Benzol mit einem Träger, seine Herstellung und Verwendung als Vernetzungshilfsmittel.

p-Dinitroso-Benzol (DNB) ist ein feinkristallines tiefgrünes Produkt, welches sich in Alkohol, Xylol und Wasser nur schwer löst. Es wird als ca. 25 bis 50%ige Suspension in Aromaten geliefert. Es wird als hochaktives Vernetzungsmittel z.B. in Klebstoffen sowie als schwefelfreies Vulkanisiermittel bei synthetischen und natürlichen Gummimischungen verwendet.

So wird in der DE 22 28 544 ein Bindemittel zur Herstellung von Verbundkörpern durch Aufvulkanisieren von Kautschuk-Mischungen auf Metalle oder andere stabile Substrate beschrieben, das neben chlorsulfoniertem Polyethylen, Chlorkautschuk, Polyisocyanaten und einem Phenolharz auch Dinitrosobenzol in Lösungsmitteln suspendiert enthält.

In der DE 34 00 852 wird DNB als Bestandteil eines feuchtigkeitshärtenden 1-Komponenten-Polyurethan-Lackes zur Beschichtung von Elastomeren beschrieben. Das DNB kann sowohl als reine chemische Substanz als auch als 30 bis 40%ige Aufschlämmung in Mengen von 0,5 bis 4 Gew.-%, bezogen auf die lösungsmittelfreien Lackharze, eingesetzt werden.

In der DE 34 00 340 wird DNB als Bestandteil eines Klebstoffes für die elektrostatische Beflockung flexibler Substrate beschrieben. Der Klebstoff besteht darüber hinaus aus einem Polyurethan-Prepolymeren mit Isocyanat-Endgruppen, einem Umsetzungsprodukt mehrfunktioneller Epoxide mit aromatischen Diisocyanaten und Lösungs- und/oder Dispergiermitteln. Das DNB ist in Mengen von 0,5 bis 4 Gew.-%, bezogen auf den lösungsmittelfreien Klebstoff, darin enthalten. Es kann entweder als reine Substanz oder als Lösung bzw. Dispersion in Nichtlösungsmitteln eingesetzt werden. Wenn darin von einer 30 bis 40 gew.-%igen Lösung von Dinitroso-Benzol in beispielsweise Xylol, Toluol oder Methylisobutylketon die Rede ist, so kann es sich dabei nicht um das p-Dinitroso-Benzol handeln, da sich dieses nur bis zu ca. 2 % in kochendem Xylol löst (siehe P. Ruggli und G. Bartusch in Helvetia Chimia Acta 27 (1944), S. 1371 ff).

In der DE 30 35 181 wird ein Haftmittel auf Basis einer wäßrigen Dispersion eines organischen polymeren Filmbildners zum Verbinden von Kautschuk mit metallischen oder nichtmetallischen Substraten unter Vulkanisationsbedingungen beschrieben, wobei die Dispersion haftungsverbessernde Zusätze, eine aromatische Polynitroso-Verbindung und gegebenenfalls Füllstoffe enthält. Bei der aromatischen Polynitroso-Verbindung handelt es sich u.a. um Dinitroso-Benzol, welches als 40%ige wäßrige Dispersion, bestehend aus 5 Teilen Dinitroso-Benzol, 1 Teil Ruß und 9 Teilen Wasser, in Mengen von 10 bis 100 Gew.-Teilen, bezogen auf das Copolymerisat, zugesetzt wird.

Die DE 12 72 301 betrifft die thermische Stabilisierung von aromatischen Nitroso-Verbindungen durch einen Zusatz von 20 bis 200 Gew.-%, bezogen auf die Dinitroso-Verbindung, eines zersetzbaren Metall- oder Ammoniumsalzes und durch Zusatz von 0 bis 234 Gew.-%, bezogen auf die Dinitroso-Verbindung, eines silikathaltigen Wasseradsorptionsmittels. Als Salz wird MgSO4 · 7 H₂O bevorzugt. Als Adsorptionsmittel werden Calciumsilikat, Ton und andere inerte Füllstoffe und Träger genannt.

EP 0321166 A1 beschreibt eine Klebstoffzusammensetzung zum Verkleben von Metall mit natürlichem oder synthetischem Kautschuk, die aus einem Latex, einer aromatischen Nitroso-Verbindung und einer Polymaleimid-Verbindung zusammengesetzt ist. Diese Schrift schlägt vor, die Klebstoff-Zusammensetzung durch Vermahlen des Latex und der Polymaleimid-Verbindung in einem Masterbatch der aromatischen Nitroso-Verbindung herzustellen. Ein Niederschlagen von Dinitroso-Benzol auf einem Träger aus einem chemisch inertem bei Raumtemperatur festen Material wird in dieser Schrift nicht offenbart.

Die bekannte Verwendung von DNB in Bindemitteln führt zwar zu dauerhaften Verklebungen, inbesondere von Kautschuk bzw. Gummi mit Metallen, und die so erhaltenen Verklebungen zeichnen sich auch durch hohe und dauerhafte Festigkeiten sowie durch hohe Beständigkeiten gegen Einflüsse von agressiven Medien aus, aber es sind auch Nachteile damit verbunden: Nicht abreagiertes DNB kann bei einer späteren Wärmebehandlung eine weitergehende Vulkanisation bewirken, was zu einer nachteiligen Versprödung der Verklebung führt. DNB ist eine verhältnismäßig teure Substanz.

Daraus ergibt sich als Aufgabe der vorliegenden Erfindung, DNB in einer geringeren Menge einzusetzen, ohne daß dadurch die mechanischen Eigenschaften des Bindemittels, insbesondere die Festigkeit und deren Beständigkeit verschlechtert wird.

Die erfindungsgemäße Lösung ist den Patentansprüchen zu entnehmen. Sie besteht im wesentlichen darin, daß das p-Dinitroso-Benzol auf einem Träger niedergeschlagen wird. So erhält es eine hochaktive Form. Entscheidend für die Wirksamkeit der erfindungsgemäßen Zusammensetzung ist also die Art, wie das DNB auf den Träger aufgebracht wird. Eine einfache Vermahlung mit z.B. Ruß bewirkt keine Aktivierung. Das DNB muß vielmehr auf einen Träger niedergeschlagen werden.
Unter "Niederschlagen" wird das Aufbringen des DNB aus einer molekular-dispersen Phase auf dem Träger in feinverteilter fester Form verstanden, z.B. im Rahmen einer Sublimation oder einer Ausfällung bzw. Umkristallisation aus einer Lösung. Unter "Niederschlagen" fällt auch das Aufbringen des DNB in situ bei seiner Synthese aus p-Benzochinondioxim (QDO) mit unterschiedlichen Oxidationsmitteln bei gleichzeitiger Anwesenheit des Trägers.

Vorzugsweise wird das DNB aus einer Lösung durch Temperaturerniedrigung auf einen Träger niedergeschlagen. Ein Niederschlagen durch Verdampfen des Lösemittels einer gesättigten Lösung oder durch Zugabe eines Fällungsmittels ist aber ebenfalls möglich.

Gute Lösemittel für DNB waren bisher nicht bekannt. Es wurde nun gefunden, daß DNB in verschiedenen Amiden in ausreichender Konzentration von 1 bis 5 g/l bei 80 bis 100 °C löslich ist. Insbesondere sind hier Dimethylformamid, Dimethylacetamid, Dimethylpropionamid und N-Methyl-2-pyrrolidon zu nennen. Vor allem bei erhöhter Temperatur ist es möglich, DNB hierin zu lösen, so daß es anschließend beim Abkühlen auf die Trägersubstanz aufgebracht werden kann und somit eine wirtschaftliche Herstellung der erfindungsgemäßen Zusammensetzung möglich ist.

Zum Aufbringen von DNB aus Lösungen können mehrere Methoden angewandt werden:
- Das DNB wird heiß gelöst, eventuell ungelöster Rückstand wird abfiltriert und schließlich gibt man dem Filtrat die Trägersubstanz hinzu. Anschließend fällt beim Abkühlen das DNB teilweise aus und schlägt sich ganz oder teilweise auf dem Träger nieder.
- Es wird zunächst wiederum eine klare Lösung hergestellt. Nach Zugabe des Trägers wird das Lösemittel eingedampft, wobei ebenfalls die erfindungsgemäße Mischung aus DNB und Träger zurückbleibt.
- Es ist auch möglich, eventuell anfallende ungelöste Rückstände nicht abzufiltrieren. Dies führt zu erhöhter Mengenausbeute bei etwas verringerter Aktivität der erfindungsgemäßen Zusammensetzung.

Das gelöste DNB wird vorzugsweise innerhalb eines Zeitraumes von 0,5 bis 15 Stunden auf dem Träger niedergeschlagen.

Neben der Auftragung aus der Lösung ist das Auftragen in situ bei der Synthese von DNB in Gegenwart eines Trägermaterials von besonderer Bedeutung. Erfindungsgemäß kommen vor allem 6 Synthese-Methoden in Betracht: Oxidation von QDO mit FeCl₃, mit H₂O₂/HCl, mit K₃[Fe(CN)₆], mit NaOCl/NaOH, mit NO/NaOCH₃ bzw. NaOCl und mit Chlor.

Derartige Synthesen sind bekannt, siehe z.B. Y.S. Khishchenko et al.: J. Appl. Chem. USSR, 42, 2245 (1969), 0. A. Ermakov und Y. F. Komkova: J. Org. Chem. USSR, 20, 2053 (1984), 0. A. Ermakov und Y. F. Komkova: J. Gen. Chem. USSR, 57, 1423 (1987), R. Nietzki und F. Kehrmann: Chem. Ber. 20, 613 (1887), US 2,419,976 (6.5.1947) und Methodicum Chimicum Bd. 6, S. 29 (1974).

Im Prinzip unterscheidet sich die Herstellung von DNB aus QDO in Gegenwart von Trägermaterialien durch:
(a) Variation des Trägermaterials,
(b) Variation des Oxidationsmittels bzw. deren Kombinationen,
(c) Variation der Reaktionszeit und
(d) Variation des pH-Wertes bei der oxidativen Reaktion (sauer: FeCl₃, H₂O₂; alkalisch: alle Halogensauerstoffsäuren und deren Salze). Von in den Beispielen angegebenen pH-Werten kann dabei in weiten Grenzen abgewichen werden; es resultieren Produkte mit geänderten Eigenschaften).

Unter "Träger" wird ein chemisch-inerter Stoff verstanden, der als Unterlage und Gerüst für den Wirkstoff DNB dient. Prinzipiell eignen sich alle bei Raumtemperatur festen Materialien, die in den während der Herstellung der erfindungsgemäßen DNB/Träger-Zusammensetzung verwandten Lösemitteln und in den Bindemitteln unlöslich sind. Ferner dürfen sie in den angewandten Mengen keine nachteiligen Effekte auf die Wirkung des Bindemittels ausüben. Als besonders geeignete Träger erwiesen sich hochporöse Stoffe.

Darunter sind Materialien zu verstehen, die über eine innere Oberfläche verfügen, d.h. entweder feinverteilt-amorph vorliegen oder durch das Kristallgitter vorgegebene Hohlräume aufweisen. Im allgemeinen sind innere Oberflächen über die Bestimmung der BET-Oberfläche nachzuweisen. Im erfindungsgemäßen Fall sind BET-Oberflächen von mehr als 10 m²/g vorteilhaft.

Ganz allgemein sind geeignet:
- Kristalline und amorphe Silicate, Alumosilicate, Borosilicate, Aluminium(hydr-)oxide.
- Feinstverteilte, amorphe und kristalline Metalloxide und - hydroxide (einzeln oder im Gemisch).
- Getrocknete wasserlösliche und -unlösliche Salze, bei denen während des Trocknungsprozesses durch geeignete Prozeßführung eine mikroporöse Partikelstruktur eingestellt wurde.
- Polymere organische Feststoffe mit BET-Oberflächen > m²/g.
- Ruße, d.h. im wesentlichen aus Kohlenstoff bestehende Gemische, die bezüglich ihrer Zusammensetzung nicht näher chemisch charakterisiert sind.

Unter den Rußen eignen sich besonders Gasruße bzw. Farbruße, die durch eine BET-Oberfläche von mehr als 20 m²/g, vorzugsweise mehr als 60 m²/g, gekennzeichnet sind. Als Beispiele sind hier die Typen "Spezialschwarz 4" und "Farbruß S 170" der Fa. DEGUSSA AG zu nennen. Diese Rußtypen weisen Veraschungsrückstände < 0,1 % und Teilchengrößen unter 50 nm (Herstellerangaben: Fa. DEGUSSA AG, Firmenschrift) auf. Ihre Dichte liegt zwischen 1,8 und 1,9 g/cm³. Falls die Teilchengrößen der Ruße mittels Lichtbeugungs- bzw. - streumethoden in Xylol oder Toluol gemessen werden (Gerät: Sympatec Helos der Fa. Sympatec), werden ohne Ultraschalldispersion mittelere Teilchengrößen unter 100 µm gemessen. Nach einer einminütigen Ultraschallbehandlung der Dispersion sollte die mittelere Teilchengröße auf Werte unter 40 µm abgefallen sein.

Weitere konkrete Beispiele sind hydrophile und hydrophobe Kieselsäure sowie hydrophobierte Zeolithe. Auch Schichtsilikate wie z.B. Hectorit, Saponit oder Magadiit sind brauchbar.

Die Teilchengröße der erfindungsgemäßen Zusammensetzung liegt im allgemeinen unter 100 µm, insbesondere unter 40 µm. Die Größe der DNB-Einzelkristalle, die auf die Trägermaterialien aufgewachsen sind, sollte anhand von rasterelektronenmikroskopischen Aufnahmen ausgemessen werden. Dabei sollte die Einzelkristallgröße Werte von 10 µm nicht über- und Werte von 0,1 µm nicht unterschreiten. Das Optimum kann von Anwendung zu Anwendung schwanken, liegt jedoch in der Größenordnung von 0,3 µm bis 3 µm. Die genannten Werte beziehen sich jedoch nur auf Einzelkristalle. Diese können durchaus verzwillingt oder zu größeren Aggregaten zusammengewachsen sind. Die Größe der Aggregate spielt dann nur eine untergeordnete Rolle, wenn die sichtbare Einzelkristallgröße innerhalb der geforderten Toleranzen von 0,3 bis 3 µm liegt.

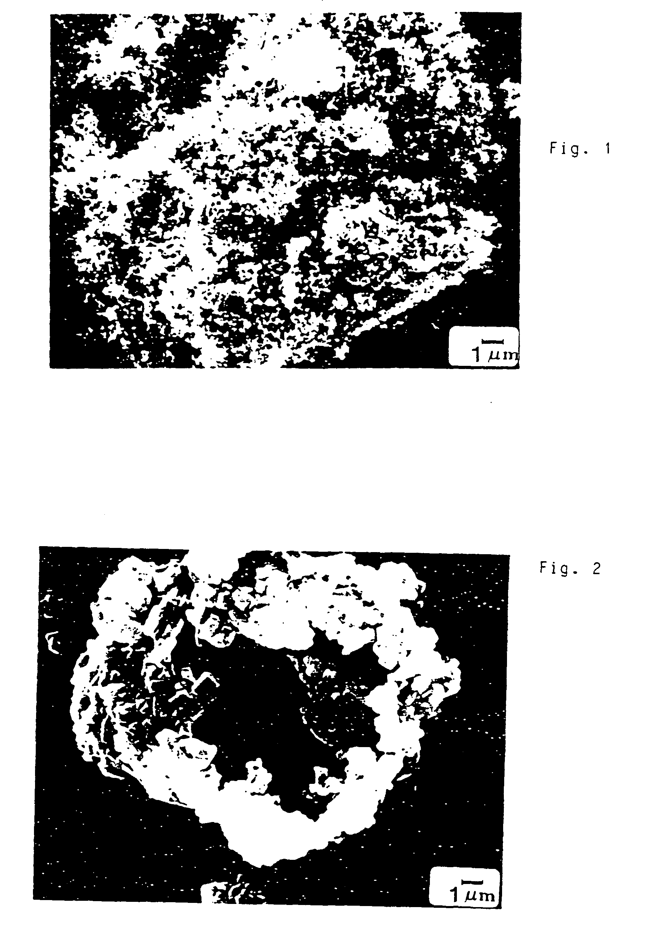

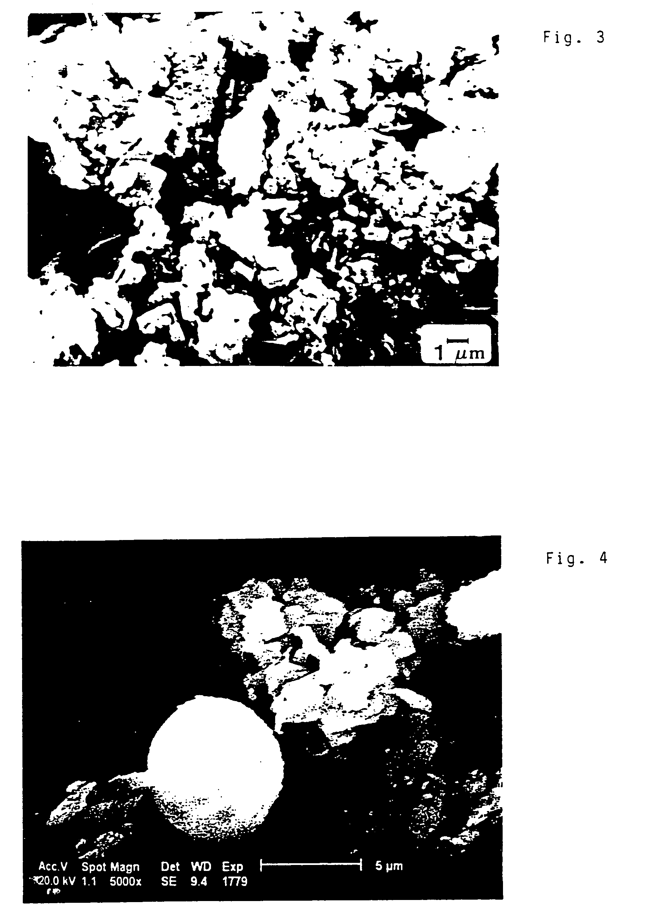

Die Figuren 1 bis 4 stellen rasterelektronenmikroskopische Aufnahmen von
1) einem Farbruß (als Trägermaterial; Spezialschwarz 4),
2) reinem DNB (hergestellt nach der Methode 2 A),
3) DNB auf Trägermaterial nach Methode 2 F) und
4) reinem DNB (wie Fig. 2) mit dem Trägermaterial (wie Fig. 1) mechanisch gemischt dar.

Die Aktivität von DNB wird auch durch die Menge bestimmt, in der es auf dem Träger vorliegt. Es wurde nämlich gefunden, daß die relative Aktivität (= Aktivität pro Gewichtseinheit reinem DNB) von DNB, das mit viel Träger verbunden ist, höher ist als wenn es z.B. im Überschuß vorliegt, bezogen auf den Träger. Da jedoch die absolute Aktivität, das heißt die Aktivität, bezogen auf die fertige Mischung, mit sinkenden DNB-Anteil abnimmt, führt ein hoher Verdünnungsgrad notwendigerweise zu höheren Trägeranteilen im Bindemittel. Dies ist jedoch oft ungünstig, so daß ein Kompromiß gefunden werden muß. Er liegt im allgemeinen bei 15 bis 90 g DNB/100 g Zusammensetzung aus DNB und Träger, vorzugsweise bei 30 bis 90 insbesondere bei 40 bis 80, und ganz besonders bevorzugt bei 50 bis 75 g/100 g Zusammensetzung.

Das DNB ist zumindest zu 10, vorzugsweise zumindest zu 50 und insbesondere zumindest zu 80 Gew.-% auf dem Träger niedergeschlagen.

Als Oxidationsmittel kommen auch Salze der Sauerstoffsäuren der Halogene Chlor, Brom und Jod in Frage. Besonders bevorzugt sind dabei die Natrium- und Kaliumsalze der chlorigen Säure, hypochlorigen Säure, der Chlor- und der Perchlorsäure. Diese Salze können sowohl einzeln für sich als auch in Kombination miteinander oder in Kombination mit einem weiteren Oxidationsmittel - wie FeCl₃ oder H₂O₂ - zur Oxidation von QDO zu DNB in Gegenwart eines geeigneten Trägermaterials eingesetzt werden. Bevorzugt wird DNB mit FeCl₃ und Wasserstoffperoxid bzw. in Kombination mit Salzen der Sauerstoffsäuren der Halogene hergestellt.

Die Reaktionstemperatur ist nicht nur für die Reaktionszeit wichtig, sondern auch für die spezifische Aktivität des DNB: So sinkt die Aktivität mit steigender Reaktionstemperatur. Deshalb sollte bei 90 °C hergestelltes DNB zweckmäßigerweise dann verwendet werden, wenn es auf seine gleichmäßig und relativ langsame Reaktion ankommt. Dagegen sollte ein bei 40°C hergestelltes DNB eingesetzt werden, wenn es auf eine schnelle Reaktion ankommt, z.B. beim Flock-Klebstoff.

Auch die Reaktionsparameter "Zeit" und "pH-Wert" können in weiten Grenzen variiert werden und beeinflussen dabei ebenfalls in gewissem Ausmaß die Reaktivität des DNB.

Die erfindungsgemäße DNB/Träger-Zusammensetzung zeigt gegenüber herkömmlichen DNB-Dispersionen eine erhöhte Vulkanisationsaktivität und erlaubt eine geringere Einsatzkonzentration des DNB. Aufgrund dieses Vorteils ist die erfindungsgemäße Zusammensetzung geeignet, vor allem beim Verkleben von Gummi mit Metallen, insbesondere unter Vulkanisationsbedingungen verwendet zu werden. Unter "Gummi" sind die vulkanisierten natürlichen oder synthetischen Kautschuke zu verstehen. Die Vulkanisation erfolgt üblicherweise bei erhöhten Temperaturen, z.B. zwischen 100 und 200 °C.

Die erfindungsgemäße Zusammensetzung eignet sich aber auch als Bestandteil eines Bindemittels ganz allgemein, z.B. in einem Gleitlack für Elastomer-Teile oder in einem Klebstoff, vor allem für Elastomere wie EPDM, NR, SBR und andere Elastomere wie Chlorkautschuk. Nähere Angaben sind dem zitierten Stand der Technik zu entnehmen.

Die Konzentration der erfindungsgemäßen DNB/Träger-Zusammensetzung kann um ein mehrfaches niedriger sein als bisher üblicherweise angegeben. Sie beträgt im allgemeinen vorzugsweise 3 bis 30 g DNB pro 100 g Feststoff. Die beanspruchten Klebstoffe werden auf bekannte Art und Weise mit Hilfe der erfindungsgemäßen DNB/Träger-Zusammensetzung anstelle der sonst verwendeten DNB-Dispersion hergestellt. Der Anteil des Trägers wird bei der Zugabe von Füllstoffen berücksichtigt, d.h. es wird entsprechend weniger an Füllstoff zugegeben.

Die Erfindung wird nun an Hand von Beispielen im einzelnen beschrieben:

### I Herstellung der DNB/Träger-Zusammensetung

### 1) Aufbringen von DNB auf einen Träger aus einer Lösung

3 g einer ca. 45%igen Suspension von DNB (Fa. Lord Corp., USA) in Xylol werden mit 100 ml Dimethylacetamid (DMA) oder N-Methyl-2-pyrrolidon (NMP) versetzt, auf 100 bis 120 °C aufgeheizt und 5 Min. bei dieser Temperatur belassen. Nach Abfiltration des unlöslichen Rückstands werden 0,25 bis 3,9 g Trägersubstanz zum heißen Filtrat gegeben. Die Suspension wird ohne weiteres Erhitzen 2 h gerührt und anschließend filtriert. Der Rückstand wird nach Waschen mit Ethanol bei 50 °C und einem Vakuum von 50 bis 200 mbar getrocknet. Die Ausbeute beträgt 1,05 bis 4,75 g eines DNB/Träger-Gemischs mit 17 bis 75 Gew.-% DNB. Nach dieser Vorschrift wurden die DNB/Träger-Mischungen B 1 bis B 7 hergestellt. Die Ausbeute und die Zusammensetzung sind der Tab. 1 zu entnehmen.

Analog zur allgemeinen Herstellungs-Vorschrift wurde auch Beispiel B 8 hergestellt, wobei der unlösliche Rückstand nicht abfiltriert wurde. Die Ausbeute und die Zusammensetzung sind wiederum der Tab. 1 zu entnehmen.

### 2A) Darstellung von DNB aus QDO/RuB/H₂O₂/HCl-Gemischen

41,4 g p-Benzochinondioxim (QDO) wurden in 200 ml Wasser aufgeschlämmt. Die erhaltene Suspension wurde nun auf 50 °C erhitzt und dann mit 25,6 g Ruß (Spezialschwarz 4) portionsweise versetzt. Es trat eine deutliche Erhöhung der Viskosität der Lösung ein. Nun wurden 48 g H₂O₂-Lösung (ca. 30 %) zugetropft. Nach beendeter Zugabe wurde noch 4 h bei 50°C nachgerührt.

Die erhaltene Suspension wurde warm abfiltriert, mit Wasser neutral gewaschen (pH = 5 bis 6) und anschließend mit Aceton nachgewaschen. Der erhaltene, schwarze Rückstand wurde dann bei 40°C (50 bis 200 mbar) getrocknet. Die Ausbeute betrug 63 g eines DNB/Ruß-Gemisches mit 60 Gew.-% DNB. Dies entsprach einer theoretischen Umsetzung von 92 % (bezogen auf DNB).

### 2B) Darstellung von DNB aus QDO/RuB/FeCl₃-Gemischen

41,4 g QDO wurden unter Rühren (80 °C) mit 1 000 ml Wasser als Suspension vorgelegt und mit 14 g Ruß (N 326) versetzt. 243 g FeCl₃ : 6 H₂O wurden bei 60°C in 250 ml Wasser gelöst und noch warm unter Rühren innerhalb von 5 min zur QDO/Wasser-Suspension hinzugegeben.
Die grünbraune Suspension wurde nun 5 min bei 80°C nachgerührt. Der erhaltene Niederschlag wurde heiß abgesaugt, mit Wasser (60 °C) neutral gewaschen und anschließend mit Aceton nachgewaschen. Der Filterrückstand wurde dann bei 50 °C (50 bis 200 mbar) getrocknet. Die Ausbeute an DNB betrug hierbei 75 %.

### 2C) Darstellung von DNB aus QDO/RuB/NaOCl/NaOH-Gemischen

10 g NaOCl-Lösung (25 %) und 40 g Wasser wurden bei 0 bis -5°C unter Rühren vorgelegt. Eine Suspension (0 bis -5 °C) von 5.1 g QDO, 2,91 g NaOH und 0,5 g Aerosil (R 972) in 15 g Wasser wurde unter Kühlung zur Natriumhypochloritlösung hinzugegeben. Nach der Zugabe wurde noch 10 min nachgerührt (0 bis -5 °C) und anschließend abgesaugt. Es wurde ein 70 % DNB/30 % Ruß-Gemisch erhalten.

### 2D) Darstellung von DNB aus QDO/Kieselsäure/K₃[Fe(CK)₆]-Gemischen

3 g QDO wurden in 30 ml 0,1 n NaOH Lösung gelöst und filtriert. Während des Filtrierens wurde die Lösung auf -5°C abgekühlt. Nach der Filtration wurden 0,7 g HDK-T40 als Träger hinzugegeben. 14,25 g Kaliumhexacyanoferrat(III) wurden in 38 ml Wasser gelöst und so langsam zugetropft, daß das gekühlte Reaktionsgemisch 0 °C nicht überschritt.
Anschließend wurde noch 5 min gerührt. Der Niederschlag wurde abzentrifugiert, mit Wasser gewaschen und nochmals zentrifugiert. Danach wurde er noch einmal in Wasser aufgeschlämmt, filtriert und abschließend mit Aceton gewaschen. Der abfiltrierte Niederschlag wurde bei 50 bis 200 mbar getrocknet. Das erhaltene Produkt hatte folgende Zusammensetzung: 76 % DNB und 24 % Träger. Dies entspricht einer Ausbeute, bezogen auf DNB von 75,6 %.

### 2E) Darstellung von DNB aus QDO/RuB/FeCl₃/H₂O₂-Gemischen

4,14 g QDO wurden in 50 ml Wasser unter Rühren bei 80 °C als Suspension vorgelegt. Nach der Zugabe von 1,62 g Ruß (Spezialschwarz 4) wurde mit einer 60°C heißen Lösung von 8,1 g FeCl₃*6 H₂O in 10 ml Wasser versetzt.
Die resultierende Suspension ließ man 5 Minuten bei 80 °C nachrühren und kühlte anschließend während 5 Minuten auf 60 °C ab. Innerhalb 10 Minuten wurden dann langsam 6,66 g einer 30%igen wäßrigen Lösung von H₂O₂ zugetropft, wobei die Reaktionstemperatur von 60 °C durch Zugabe von Eis gehalten wurde.
Die Aufarbeitung erfolgt wie in Beispiel 2B. Das abfiltrierte und getrocknete Produkt enthält bei einer Ausbeute von 5,4 g 70 % DNB auf 30 % Ruß (entsprechend einer Ausbeute an DNB von 93 %).

### 2F) Darstellung von DNB aus QDO/Ruß FeCl₃-Gemischen

Analog zu Beispiel 2B wurde der Ruß Spezialschwarz 4 anstelle von N 326 eingesetzt. Es wurden praktisch die gleichen Ergebnisse erhalten.

### II Herstellung der Bindemittel

Die Komponenten gemäß Tab. 2a (ausgenommen c) bzw. 2b werden in einen Dispergierer gegeben und bei Raumtemperatur innerhalb von 45 min bis zu einer Korngröße < 40 µm gemahlen. Danach wird die Dispersion unter Zugabe der Pos. c (gelöst in einem Teil des Xylols) 2 h homogenisiert.

Zum Vergleich mit den erfindungsgemäßen Beispielen I bis IV und XI bis XIV wurden auch Bindemittel mit der gleichen Zusammensetzung hergestellt, wobei das DNB aber als Suspension zugesetzt wurde (Beispiele V bis VIII und XV).

### III Herstellung und Untersuchung der Probekörper

Die Beurteilung der Haftung erfolgte an Schälprüfkörpern gemäß der Norm AStM-D 429 B. Zur Herstellung der Prüfkörper wurden die Blechproben aus kaltgewalztem Stahl mit 1,1,1-Trichlorethandampf entfettet, mit Hartgußkies gestrahlt und erneut mit 1,1,1-Trichlorethandampf behandelt.
Anschließend wurden die Bleche mit ca. 10 µm (Trockenschichtstärke) eines Haftprimers auf Phenolharzbasis und mit ca. 20 µm der in Tab. 2 beschriebenen Bindemittel beschichtet.
Nach dem Trocknen bei Raumtemperatur wurden die Bleche in der Presse unter einem Druck von ca. 50 MPa unter den entsprechenden Vulkanisationsbedingungen an die Kautschukmischungen gebunden, so daß ein Schälprüfkörper gemäß ASTM D 429 B entstand.
Nach 24stündiger Lagerung der Prüfkörper bei Raumtemperatur wurde die Gummiauflage abgeschält. Bestimmt wurden dabei die Schälfestigkeit und das Reißbild gemäß ASDM D 429, Methode B (DIN 53531, Teil 1).

Das Reißbild wurde folgendermaßen beurteilt: Die Zahl drückt den Anteil Elastomerbruch in % aus, wobei bei Bruch im Elastomeren R (Rubber), bei Bruch zwischen Elastomer und Bindemittel RC (Rubber-Cement), bei Bruch zwischen Primer und Bindemittel CP (Cement-Primer) und Ablösung vom Metall M(Metal) angegeben wird.

Ein weiterer, aussagekräftiger Test ist die sogenannte "Vorheizbeständigkeit". Dabei wurden bindemittelbeschichtete Bleche bei der Vulkanisationstemperatur vorgeheizt, bevor die Gummimischung zugesetzt und vulkanisiert wurde. Je länger die Vorheizzeit (in min) bis zur Erreichung von 100 % Elastomerbruch war, desto besser die Vorheizbeständigkeit und damit das Bindemittel.

Bei dem Kochendwassertest (KWT) wurden die Proben 2 h im Wasser bei 95 bis 98 °C unter gleichzeitiger Belastung der Bindung mit 2 kg/2,54 cm gelagert.

### Ergebnisse

Die Haftfestigkeit der erfindungsgemäß hergestellten Proben lag sowohl im Schältest als auch im Kochendwassertest in allen Fällen so hoch, daß bei der nachfolgenden Prüfung der Schälfestigkeit der Gummi riß. Der 100%ige Bruch im Gummi beweist eine einwandfreie Haftung und Beständigkeit auch bei nur 0,35 Gew.-% DNB (Bindemittel IV).

Der Vergleich der erfindungsgemäßen Bindemittel I, II und III mit dem Bindemittel VI gemäß dem Stand der Technik zeigt, daß die Konzentration an DNB, wenn es erfindungsgemäß eingebracht wird, auf ein Drittel bis zur Hälfte gesenkt werden kann im Vergleich zum Einsatz von bekannten DNB-Suspensionen. Das bekannte Bindemittel muß 25 % DNB - bezogen auf den Festgehalt - enthalten, um eine gleich gute Wirkung zu erzielen (siehe Beispiel V).

Zu einem ähnlichen Ergebnis kommt man bei einem Vergleich des erfindungsgemäßen Beispieles IV mit den Beispielen gemäß dem Stand der Technik (VII und VIII).

Zu ähnlichen Ergebnissen kommt man auch mit in-situ-hergestellten DNB/Träger-Zusammensetzungen (s. Tab. 2b und 3b).

Die Aktivität der erfindungsgemäßen Zusammensetzungen ist also mehrfach größer als bei den bekannten Zusammensetzungen.

**Tab. 1: Zusammensetzung der erfindungsgemäßen p-Dinitroso-Benzol-Zusammensetzungen, hergestellt aus Lösungen**

| lfd. Nr. | Löesemittel | Aubs. | Gehalt DNB | | Träger | |
|---|---|---|---|---|---|---|
| | | g | Gew.-% | Handelsname | Hersteller | Chemische Natur |
| B 1 | NMP | 4,7 | 17 | FK 320 | Degussa | Fällungskieselsäure |
| B 2 | NMP | 2,25 | 35 | Zeolith S115 | Union Carbide | hydrophobierter Zeolith |
| B 3 | NMP | 3,2 | 25 | HDK T40 | Wacker | hydrophile Kieselsäure |
| B 4 | DMA | 1,05 | 75 | HDK T40 | Wacker | hydrophile Kieselsäure |
| B 5 | DMA | 1,05 | 75 | Aerosil R 972 | Degussa | hydrophobierte Kieselsäure |
| B 6 | DMA | 1,05 | 75 | Corax N 326 | Degussa | Ruß |
| B 7 | DMA | 1,32 | 60 | Corax N 326 | Degussa | Ruß |
| B 8¹⁾ | DMA | 2,05 | 60 | Spezialschwarz 4 | Degussa | Ruß |

| | | | | | | |
|---|---|---|---|---|---|---|
| ¹⁾ mit unlöslichem Rückstand | | | | | | |

**Tab. 2a: Zusammensetzung der Bindemittel (in Gew.-%, bezogen auf die gesamte Zusammensetzung)**

| | Bindemittel | | | | | | | | |
|---|---|---|---|---|---|---|---|---|---|
| | Erfindungsgemäß | | | | Vergleich | | | | |
| Komponente | I | II | III | IIIa | IV | V | VI | VII | VIII |
| a) Chlorkautschuk | 2,1 | 1,8 | 1,8 | 1,8 | 14,6 | 1,75 | 1,8 | 14,6 | 14,6 |
| b) nachhalogeniertes Polymeres | 0 | 0 | 0 | - | 6,2 | 0 | 0 | 6,2 | 6,2 |
| c) chlorsulfoniertes Polyethylen | 6,1 | 5,2 | 5,2 | 5,2 | 0 | 5,2 | 5,2 | 0 | 0 |
| d) Dinitrosobenzol ¹⁾ | 2,0 | 2,0 | 2,0 | 2 | 0,35 | 6,0 | 2,0 | 2,1 | 0,35 |
| aus Beispiel | B 8 | B 7 | B 4 | B 5 | B 1 | | | | |
| e) Bismaleinimid | 3,2 | 2,75 | 2,75 | 2,75 | 0 | 2,75 | 2,75 | 0 | 0 |
| f) Bleiphosphit | 6,9 | 6,0 | 6,0 | 6 | 1,0 | 6,0 | 6,0 | 1,0 | 1,0 |
| g) Ruß | (1,25) | (1,25) | 1,25 | 1,25 | 2,1 | 1,25 | 1,25 | 2,1 | 2,1 |
| h) Kieselsäure | 1,2 | 1,0 | (0,7)+0,3* | (0,7)+0,3* | (1,73) | 1,0 | 1,0 | 0 | 0 |
| i) Xylol | 77,25 | 80,0 | 80,0 | 80,0 | 74,2 | 76,0 | 80,0 | 74,0 | 75,75 |

| | | | | | | | | | |
|---|---|---|---|---|---|---|---|---|---|
| Anmerkungen siehe Seite 16 | | | | | | | | | |

**Tabelle 2b): Zusammensetzung der Bindemittel XI bis XV (in Gew.-%, bezogen auf die gesamte Zusammensetzung)**

| Komponente | | XI | XII | XIII | XIV | XV |
|---|---|---|---|---|---|---|
| | | -----Erfindungsgemäß----- | | | | Vergleich |
| a) | Chlorkautschuk | 2.1 | 2.1 | 2.1 | 2.1 | 1.80 |
| c) | Chlorsulfoniertes Polyethylen | 6.1 | 6.1 | 6.1 | 6.1 | 5.20 |
| d) | DNB | 3.0 | 3.0 | 3.0 | 3.0 | 6.0 |
| | aus Beispiel | 2A | 2F | 2C | 2D | |
| e) | Bismaleinimid | 3.20 | 3.20 | 3.20 | 3.20 | 2.75 |
| f) | Bleiphosphit | 6.90 | 6.90 | 6.90 | 6.90 | 6.00 |
| g) | Ruß | 1.25 | 1.25 | 1.25 | 1.25 | 1.25 |
| h) | Kieselsäure | 1.20 | 1.20 | 1.20 | 1.20 | 1.00 |
| j) | Xylol | 76.25 | 76.25 | 76.25 | 76.25 | 76.0 |

| | | | | | | |
|---|---|---|---|---|---|---|
| Anmerkungen zur Tab. 2 * = 0,7 % Kieselsäure aus DNB-Kieselsäure-Compound, 0,3 % Kieselsäure zusätzlich der Rezeptur zugegeben ¹⁾ p-Dinitroso-Benzol, Darreichungsform: - in den Vergleichsversuchen als 35 %ige Suspension in Xylol, Fa. Lord - in den erfindungsgemäßen Bindemitteln unter Zusatz der erfindungsgemäß hergestellten Beispiele B8, B7, B4, B5 und B1 auf den eingeklammerten Trägermaterialien | | | | | | |

**Tab. 3a): Reiß-Bild der Gummi/Metall-Bindung**

| Test und Proben | | | Bindemittel | | | | | | | | |
|---|---|---|---|---|---|---|---|---|---|---|---|
| | | | Erfindungsgemäß | | | | Vergleich | | | | |
| | | | I | II | III | IIIa | IV | V | VI | VII | VIII |
| - | Nach Schäl-Test | | | | | | | | | | |
| | a) HC 101 | (NR)¹⁾ | 100 R | 100 R | 100 R | 100 R | 100 R | 100 R | 80 R/RC | 100 R | 5 R/RC |
| | b) HC 202 A | (SBR)²⁾ | - | - | - | - | 100 R | - | - | 100 R | 100 R |
| | c) 40 468 | (EPDM)³⁾ | 100 R | 100 R | 100 R | 100 R | - | 100 R | 50 R/RC | - | - |
| | d) 40 467 | (EPDM)⁴⁾ | 100 R | 100 R | 100 R | 100 R | - | 100 R | 40 R/RC | - | - |
| - | Nach Kochendwasser-Test | | | | | | | | | | |
| | a) HC 101 | (NR)¹⁾ | 100 R | 100 R | 100 R | 100 R | 100 R | 100 R | 50 R/RC | 100 R | OR |
| | c) 40 468 | (EPDM)³⁾ | 100 R | 100 R | 100 R | 100 R | - | 100 R | 30 R/RC | - | - |
| | d) 40 467 | (EPDM)⁴⁾ | 100 R | 100 R | 100 R | 100 R | - | 100 R | 20 R/RC | - | - |

| | | | | | | | | | | | |
|---|---|---|---|---|---|---|---|---|---|---|---|
| ¹⁾ Natur-Kautschuk: Vulkanisation bei 153 °C in 10 Min. ²⁾ Styrol-butadien-Kautschuk: Vulkanisation bei 153 °C in 10 Min. ³⁾ Ethylen-propylen-dien-Kautschuk: Vulkanisation bei 160 °C in 12 Min. ⁴⁾ s.3: Vulkanisation bei 160 °C in 10 Min. | | | | | | | | | | | |

**Tabelle 3b): Reiß-Bild der Gummi/Metall-Bindung mit den Bindemitteln XI bis XV (Vulkanisationstemperatur 153 °C, 10 min).**

| Test und Proben | XI | XII | XIV | XV |
|---|---|---|---|---|
| | ------Erfindungsgemäß---- | | | Vergleich |
| (1) Schältest | | | | |
| HC 101 (NR) | 100 R | 100 R | 100 R | 100 R |
| 40 468 (EPDM) | 100 R | 100 R | 80 R/RC | 80 R/RC |
| | | | | |
| (2) Kochendwassertest | | | | |
| HC 101 (NR) | 100 R | 100 R | 100 R | 80 R/RC |
| 40 468 (EPDM) | 100 R | 100 R | 50 R/RC | 50 R/RC |
| | | | | |
| (3) Vorheizbeständigkeit (HC 101) | | | | |
| Zeit | | | | |
| 15 min | 100 R | 100 R | 100 R | 100 R |
| 18 min | 100 R | 100 R | 100 R | 100 R |
| 21 min | 100 R | 100 R | 100 R | 65 R/RC |
| 24 min | - | 100 R | - | 60 R/RC |
| 27 min | - | 100 R | - | |

### IV Vergleich von DNB auf RuB mit DNB neben Ruß

Als Beispiel dient DNB, hergestellt nach Methode 2F mit dem Trägermaterial Spezialschwarz 4 (DEGUSSA). Verglichen wird mit DNB, hergestellt nach Methode 2F, jedoch ohne Zusatz von Trägermaterial. Letzteres wurde nachträglich durch mechanisches Mischen / Vermahlen mit der in 2F eingesetztenb Menge an Trägermaterial (Spezialschwarz 4) intensiv gemischt.

Beide Produkte wurden eingearbeitet in ein Bindemittel gleicher Rezeptur (siehe II) und anwendungstechnisch abgeprüft (siehe III).

Die beiden DNB-haltigen Rezepturen lieferten unterschiedliche Vorheizbeständigkeiten, obwohl ihr Gehalt an DNB und Ruß identisch war. Angestrebt wurd in diesem Beispiel eine möglichst lange Vorheizbeständigkeit, was einem Bruchbild von 100 R nach > 20 Minuten Vorheizzeit entspricht.
Das manuell vermahlene DNB/Ruß Bindemittel zeigt einen Einbruch der Haftung im Test nach 15 Minuten (65 R/RC), während das erfindungsgemäße Bindemittel noch nach 27 Minuten Vorheizzeit eine Bindefestigkeit von 100 R aufweist (siehe Tabelle 3b).

## Patentansprüche

1. Zusammensetzung, enthaltend p-Dinitroso-Benzol, niedergeschlagen auf einem Träger aus einem chemisch inerten, bei Raumtemperatur festen Material.

2. Zusammensetzung nach Anspruch 1, **dadurch gekennzeichnet, daß** es aus einer Lösung oder durch Sublimation niedergeschlagen wurde, bzw. bei seiner Synthese in Anwesenheit eines oder mehrerer Träger.

3. Zusammensetzung nach Anspruch 1, **gekennzeichnet durch** hydrophile oder hydrophobe Kieselsäure, hydrophobierte Zeolithe, Ruße und Schichtsilikate als Träger.

4. Zusammensetzung nach Anspruch 1, **gekennzeichnet durch** einen Anteil von 30 bis 90 g DNB/100 g Zusammensetzung aus DNB und Träger.

5. Herstellung der Zusammensetzung nach mindestens einem der Ansprüche 1 bis 4 durch Niederschlagen aus einer molekular-dispersen Phase von p-Dinitroso-Benzol.

6. Herstellung der Zusammensetzung nach mindestens einem der Ansprüche 1 bis 5, **gekennzeichnet durch** Niederschlagen aus einer Lösung, insbesondere in mindestens einem der Lösungsmittel: Dimethyl-formamid, -acetamid, -propionamid oder N-Methyl-2-pyrrolidon.

7. Herstellung nach Anspruch 6, **gekennzeichnet durch** Abkühlen der Lösung in Gegenwart folgender Träger: hydrophile oder hydrophobe Kieselsäuren, hydrophobierte Zeolithe, Ruße oder Schichtsilikate.

8. Herstellung der Zusammenstzung nach mindestens einem der Ansprüche 1 bis 5, **gekennzeichnet durch** Niederschlagen des DNB bei seiner Synthese in Gegenwart eines oder mehrerer Träger.

9. Verwendung der Zusammensetzung nach mindestens einem der Ansprüche 1 bis 4 zur Herstellung von Klebstoffen, insbesondere zum Kleben von Elastomeren.

10. Verwendung der Zusammensetzung nach mindestens einem der Ansprüche 1 bis 4 als Vernetzungshilfsmittel für die Polymerisation bzw. Vernetzung von Elastomeren, insbesondere beim Verkleben von Gummi mit Metall.

## Claims

1. A composition containing p-dinitrosobenzene deposited on a support made of a chemically inert material that is solid at room temperature.

2. The composition according to claim 1, **characterized in that** said p-dinitrosobenzene has been deposited from a solution or by sublimation or in the course of its synthesis in the presence of one or more supports.

3. The composition according to claim 1, **characterized by** hydrophilic or hydrophobic silica, hydrophobized zeolites, carbon blacks and layer silicates as supports.

4. The composition according to claim 1, **characterized by** a proportion of from 30 to 90 g of DNB/100 g of composition consisting of DNB and support.

5. Preparation of the composition according to at least one of claims 1 to 4 by deposition from a molecularly disperse phase of p-dinitrosobenzene.

6. Preparation of the composition according to at least one of claims 1 to 5, **characterized by** deposition from a solution, especially in at least one of the solvents: dimethyl formamide, dimethyl acetamide, dimethyl propion-amide or N-methyl-2-pyrrolidone.

7. The preparation according to claim 6, **characterized by** cooling the solution in the presence of the following supports: hydrophilic or hydrophobic silicas, hydrophobized zeolites, carbon blacks or layer silicates.

8. Preparation of the composition according to at least one of claims 1 to 5, **characterized by** deposition of the DNB in the course of its synthesis in the presence of one or more supports.

9. Use of the composition according to at least one of claims 1 to 4 for the preparation of adhesives, especially for the bonding of elastomers.

10. Use of the composition according to at least one of claims 1 to 4 as a cross-linking aid for the polymerization or cross-linking of elastomers, especially in the bonding of rubber to metal.

## Revendications

1. Composition contenant le p-dinitrosobenzène déposé sur un support consistant en un matériau chimiquement inerte qui est solide à la température ambiante.

2. Composition selon la revendication 1, **caractérisée en ce que** ledit p-dinitrosobenzène a été déposé à partir d'une solution ou par sublimation ou au cours de sa synthèse en la présence d'un ou de plusieurs supports.

3. Composition selon la revendication 1, **caractérisée par** la silice hydrophile ou hydrophobe, les zéolithes rendues hydrophobes, les noirs de carbone et les phyllosilicates en tant de supports.

4. Composition selon la revendication 1, **caractérisée par** une proportion de 30 à 90 g de DNB/100 g de composition consistant en DNB et support.

5. Préparation de la composition selon au moins une des revendications 1 à 4 par déposition à partir d'une phase moléculairement dispersée de p-dinitrosobenzène.

6. Préparation de la composition selon au moins une des revendications 1 à 5, **caractérisée par** la déposition à partir d'une solution, notamment dans un des solvants: diméthylformamide, diméthylacétamide, diméthylpropionamide ou N-méthyl-2-pyrrolidone.

7. Préparation selon la revendication 6, **caractérisée en ce que** l'on fait refroidir la solution en la présence des supports suivants: silices hydrophiles ou hydrophobes, zéolithes rendues hydrophobes, noirs de carbone ou phyllosilicates.

8. Préparation de la composition selon au moins une des revendications 1 à 5, **caractérisée par** la déposition du DNB au cours de sa synthèse en présence d'un ou de plusieurs supports.

9. Utilisation de la composition selon au moins une des revendications 1 à 4 pour préparer des adhésifs, notamment pour coller les élastomères.

10. Utilisation de la composition selon au moins une des revendications 1 à 4 en tant d'adjuvant de réticulation pour la polymérisation ou réticulation des élastomères, notamment dans le collage de caoutchouc sur métal.
